# EUROPÄISCHE PATENTSCHRIFT

(11) **EP 1 145 954 B1**
(45) Veröffentlichungstag und Bekanntmachung des Hinweises auf die Patenterteilung: **30.06.2004**
(21) Anmeldenummer: 01108685.7
(22) Anmeldetag: 06.04.2001
(51) Int. Cl.: B64C 23/06

(54) **Vorrichtung sowie Verfahren zur Reduzierung von Nachlaufwirbeln hinter Flugzeugen im Landeanflug**
Device and method for reducing trailing vortices behind aircraft on approach to land
Dispositif et procédé pour la réduction des tourbillons de sillage à l'arrière des avions à l'approche de l'atterissage

(30) Priorität: 13.04.2000 DE 10018389
(43) Veröffentlichungstag der Anmeldung: 17.10.2001
(73) Patentinhaber: Airbus Deutschland GmbH, 21129 Hamburg (DE)
(72) Erfinder: Hünecke, Klaus, Dr., 28844 Weyhe (DE)
(74) Vertreter: Hansmann, Dierk, Dipl.-Ing.

(56) Entgegenhaltungen:
- WO-A-99/00297
- US-A- 3 881 669
- US-A- 4 466 586
- US-A- 4 739 957
- US-A- 6 042 059

## Beschreibung

Die Erfindung betrifft ein Flugzeug mit mindestens einer Vorrichtung sowie ein Verfahren zur Reduzierung von Nachlaufwirbeln hinter Flugzeugen, die sich im Landeanflug befinden, wobei das Flugzeug zur Auftriebserzeugung einen rechten und einen linken Tragflügel aufweist, die Hochauftriebssysteme umfassen, gemäß dem Oberbegriff des Anspruchs 1.

An den Tragflügeln eines Flugzeuges, insbesondere eines Unterschall-Transportflugzeuges, sind Hochauftriebssysteme notwendig, um im Langsamflug, beispielsweise im Landeanflug, den erforderlichen Auftrieb zu erzeugen. Derartige Hochauftriebssysteme bestehen in der Regel aus Vorflügeln und Landeklappen. Wenn ein Flügel Auftrieb erzeugt, entsteht hinter dem Flügel immer eine Nachlaufströmung mit Wirbeln. Dabei bildet sich anfänglich im Bereich des äußeren Endes der jeweiligen Landeklappe ein Klappenwirbel sowie im Flügelspitzenbereich ein Randwirbel. Dieses Wirbelsystem rotiert umeinander, gleichzeitig rotieren die einzelnen Wirbel um sich selbst, wobei das gesamte Wirbelsystem in einer spiralförmigen Bewegung mit der Strömung fortgetragen wird. Die von großen Transportflugzeugen erzeugten Wirbel stellen eine Gefahr für den nachfolgenden Luftverkehr dar, insbesondere auf den dichtbeflogenen Anflugstrecken. Vorgeschriebene Sicherheitsabstände zwischen anfliegenden Flugzeugen verringern die Gefahr, begrenzen aber auch die Kapazität einer Landebahn, da zur Einhaltung der Flugsicherheit der notwendige horizontale Abstand der landenden Flugzeuge größer wird, je größer bzw. schwerer die Flugzeuge werden und die Wirbelintensität vom Gewicht eines Flugzeugs abhängt. Eine Nutzung von Großflugzeugen der neuen Generation, beispielsweise einer A3XX, sowie der wachsende Luftverkehr verlangen jedoch eine Reduzierung der großzügig bemessenen Sicherheitsabstände. Seitens des Flugzeug-Entwurfs ist das Ziel daher auf Maßnahmen am Flugzeug gerichtet, die Nachlaufwirbel zu verringern und ihre vorzeitige Auflösung zu fördern.

Die internationale Forschung beschäftigt sich seit längerem mit Möglichkeiten, die Wirbel zu bekämpfen. Insbesondere aus WO 99/00297 ist eine Lösung bekannt geworden, bei dem durch kontinuierliches wechselseitiges Ausschlagen des Querruders und einer rumpfnahen Klappe die Wirbel zu Querschwingungen angeregt werden sollen, die ihre vorzeitige Zerstörung bewirken. Dabei wird die Entstehung der Großwirbel hingenommen; die vorgeschlagenen Maßnahmen sind auf diese Wirbel ausgerichtet.
Aus GB 2 051 706 A1 ist eine Einrichtung direkt am Ende einer Landeklappe vorgesehen, die den Widerstand des Flugzeuges verringern soll. Auch ist vorgesehen, dass mit Nutzung solcher Einrichtung die Nachlaufwirbel reduziert werden. Die Vorrichtung ist jedoch nicht geeignet, einen kontrollierten Störwirbel zu erzeugen wie mit der hier vorgeschlagenen Erfindung. Die Art und Weise der Wirbelminderung wird nicht mitgeteilt.

In US-PS 6,042,059 wird ein Verfahren vorgeschlagen, das die Flügelhauptwirbel destabilisieren will durch vorwiegend vertikal angeordnete aerodynamische Flächen, die an genau festgelegten Stellen auf dem Flügel oder dem Höhenleitwerk positioniert werden sollen, um Störwirbel zu erzeugen. Das Verfahren setzt ein Mehrwirbelsystem aus co-und kontra-rotierenden Wirbeln voraus, mit vorgeschriebenen Größen der zugeordneten Wirbelstärken. Es sollen die Flächen zeitabhängig verstellt werden, um durch schwingende Bewegungen die Instabilitäten zu fördern. Das Entstehen der kräftigen Flügelhauptwirbel wird nicht beeinflusst. Die Wirkung der vorgeschlagenen Maßnahmen ist auf die Störung der Wirbel im Femfeld gerichtet. Der Oberbegriff des Anspruchs 1 basiert auf diesem Dokument.

Der vorliegenden Erfindung liegt daher die Aufgabe zugrunde, ein gattungsgemäßes Flugzeug sowie ein gattungsgemäßes Verfahren so auszubilden, dass Nachlaufwirbel hinter Flugzeugen, die sich im Landeanflug befinden, reduziert werden und ein vorzeitiges Auflösen derartiger Wirbel gefördert wird.

Diese Aufgabe wird bei einem gattungsgemäßen Flugzeug durch die im Patentanspruch 1 genannten Maßnahmen gelöst.
Ein gattungsgemäßes Verfahren ist im Patentanspruch 12 angegeben.

Dabei ist insbesondere vorteilhaft, dass mit der erfindungsgemäßen Vorrichtung bzw. dem erfindungsgemäßen Verfahren das Entstehen einer gefährlichen Wirbelströmung hinter Flugzeugen im Landeanflug verhindert wird und damit die Sicherheit für den Flugverkehr erhöht wird. Die Sicherheitsabstände zwischen den landenden Flugzeugen können reduziert werden, was die Kapazität einer Landebahn erhöht und somit dem wachsenden Luftverkehr Rechnung trägt. Insbesondere für Großflugzeuge mit einem hohen Gewicht, bei denen derzeit eine Wirbelgefährdung als wesentliches Problem im Luftverkehr angesehen wird, ist die erfindungsgemäße Zusatzklappe als eine einfache und wirkungsvolle Maßnahme anwendbar. Sie ist als ein einfaches kleines Bauteil ausgeführt und lässt sich bei Nichtgebrauch einfach am Tragflügel unterbringen.

Weiterbildungen und vorteilhafte Ausgestaltungen sind in den Ansprüchen 2 bis 11 sowie 1 3 bis 15 angegeben.

Der Unteranspruch 2 zeigt den vorteilhaten Anbringungspunkt am Tragflügel.

Die Unteransprüche 3 und 4 geben den für die Wirkung als Wirbelgenerator vorteilhaften Anstellwinkelbereich der Zusatzklappe an.

In den Unteransprüchen 5 bis 8 sind Ausbildungen der Zusatzklappe angegeben, die einen kontrollierten Vorderkantenwirbel zur Bildung eines Störwirbels an der Zusatzklappe erzeugen. Im Falle der Maßnahme gemäß Anspruch 7, bei der die Zusatzklappe die Form eines Deltaflügels aufweist, entstehen zwei gegenläufig drehende Wirbel als Wirbelpaar, die den Störwirbel bilden.

Die Ansprüche 9 bis 11 sind auf ein Flugzeug gerichtet, wobei die möglichen Anordnungen der erfindungsgemäßen Vorrichtung an den Flugzeugtragflügeln angegeben sind.

In dem Unteranspruch 13 sind die Verfahrensschritte zur Minderung der Wirbelstärke des Nachlaufwirbels angegeben.

Die Unteransprüche 14 bis 15 geben alternative Vorgehensweisen zum Betreiben der erfindungsgemäßen Zusatzklappen an einem Flugzeug an.

In der Zeichnung sind Ausführungsbeispiele der Erfindung dargestellt, die nachstehend anhand der Figuren 1 bis 5 näher beschrieben sind. In den Figuren sind gleiche Bauteile mit gleichen Bezugszeichen versehen.

Es zeigen:
- Fig. 1: ein Flugzeug in perspektivischer Darstellung mit einer erfindungsgemäßen Vorrichtung zur Reduzierung der Nachlaufwirbel,
- Fig. 2: eine Darstellung von Flugzeugen in der Ansicht von oben, wobei in Fig. 2A ein Flugzeug in einer Basiskonfiguration und in Fig. 2B ein Flugzeug mit der erfindungsgemäßen Vorrichtung ersichtlich ist,
- Fig. 3: eine Darstellung von Flugzeugen mit entstehenden Nachlaufwirbeln in der Ansicht von oben, wobei in Fig. 3A Wirbel des Flugzeugs in einer Basiskonfiguration und in Fig. 3B Wirbel des Flugzeugs mit der erfindungsgemäßen Vorrichtung ersichtlich ist,
- Fig. 4: zeigt in den Figuren 4A, 4B, 4C jeweils Ausführungsformen der erfindungsgemäßen Vorrichtung
und
- Fig. 5: einen Querschnitt durch den Tragflügel mit einer erfindungsgemäßen Vorrichtung.

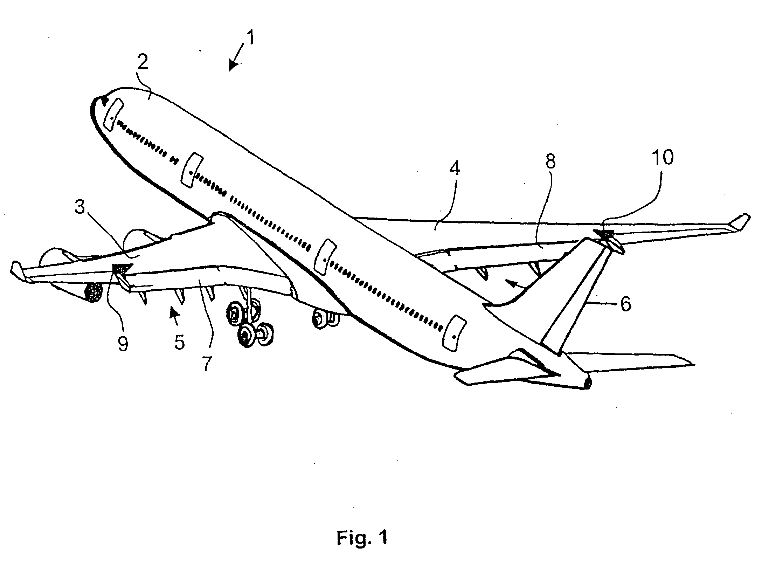

In Fig. 1 ist ein Flugzeug 1 in einer Perspektivdarstellung ersichtlich. Das Flugzeug 1 ist als ein Unterschall-Transportflugzeug insbesondere zum Transport von Passagieren vorgesehen. Am Rumpf 2 des Flugzeuges 1 ist ein linker Tragflügel 3 und ein rechter Tragflügel 4 angeordnet. Jeder Tragflügel 3 bzw. 4 weist zur Erzeugung des notwendigen Auftriebs beim Langsamflug, beispielsweise beim Landeanflug, Hochauftriebssysteme 5 bzw. 6 auf. Derartige Hochauftriebssysteme 5 bzw. 6 weisen unter anderem Landeklappen 7 und 8 auf. An jedem Tragflügel 3 bzw. 4 ist eine erfindungsgemäße Vorrichtung 9 bzw. 10 zur Reduzierung von Nachlaufwirbeln vorgesehen, deren Anordnung, Form und Wirkungsweise in den nachfolgenden Figuren genauer beschrieben wird.

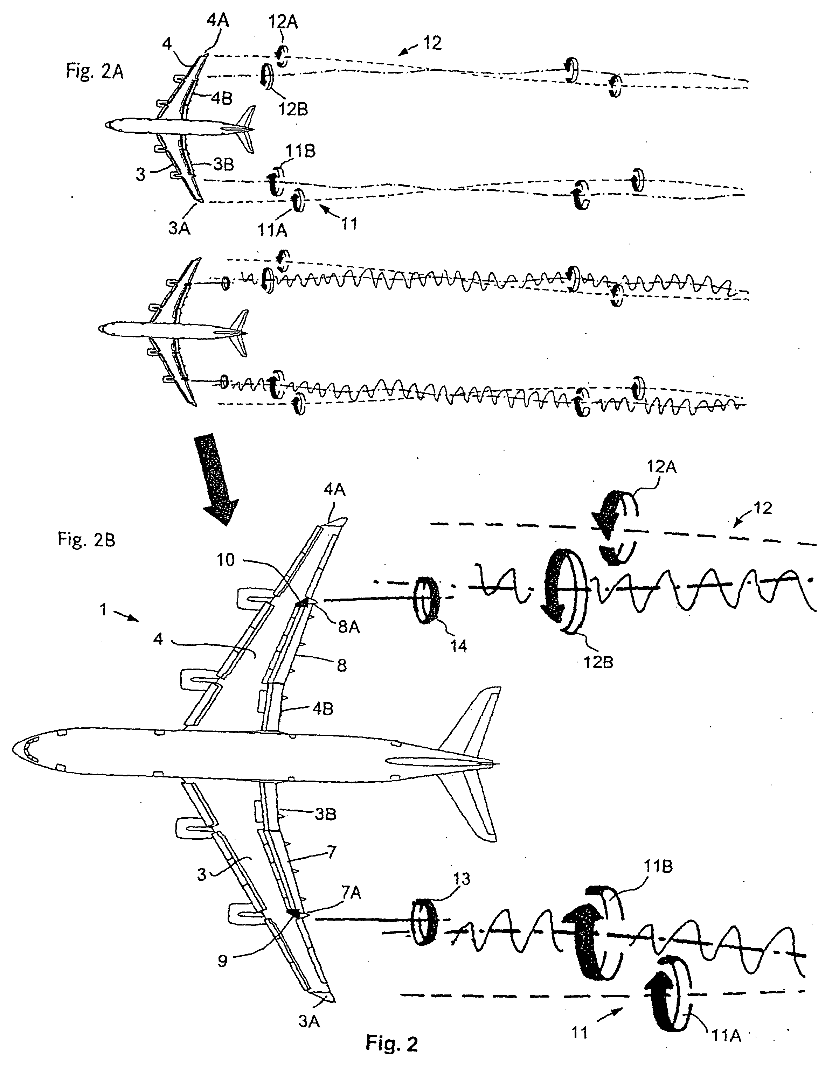

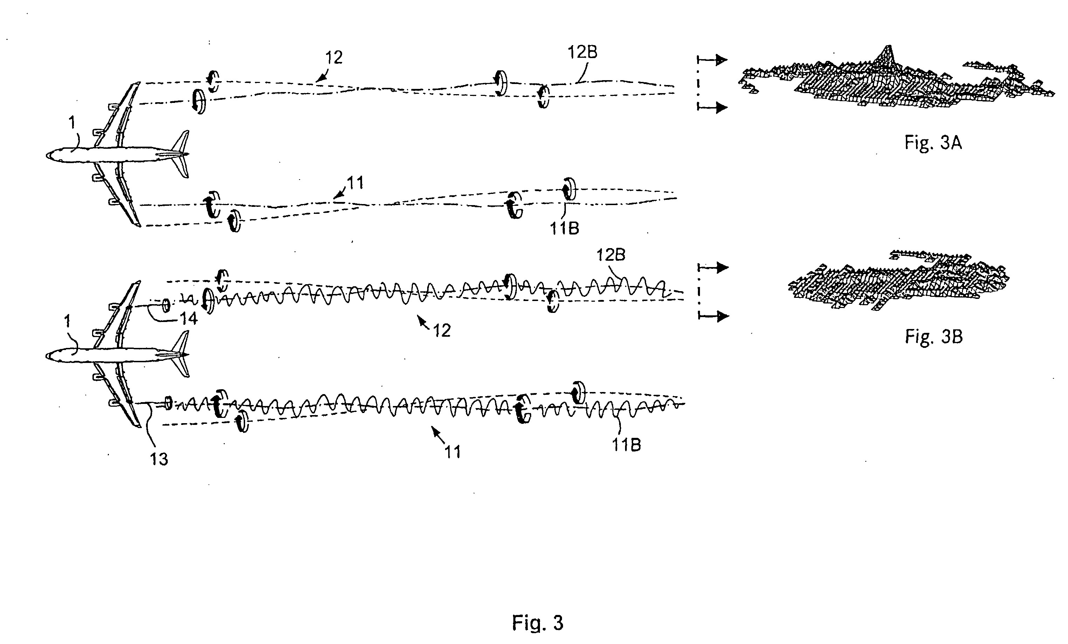

In den Figuren 2A und 2B sind in einer Ansicht von oben Flugzeuge mit entstehenden Nachlaufwirbeln dargestellt. In der Fig. 2A ist eine Basiskonfiguration des Flugzeuges 1 ersichtlich, wobei die am linken Tragflügel 3 und die am rechten Tragflügel 4 im wesentlichen entstehenden Nachlaufwirbel 11 bzw. 12 durch Angabe ihres Verlaufs und ihrer Drehrichtung mittels Pfeile erkennbar sind. An der Flügelspitze 3A bzw. 4A des Tragflügels 3 bzw. 4 entsteht ein Randwirbel 11A bzw. 12A. Ein Klappenwirbel 11B bzw. 12B entsteht an der Flügelhinterkante 3B bzw. 4B im Bereich der an der Flügelhinterkante zusammenlaufenden wirbeligen Strömung. Die "Schwachstelle" der wirbeligen Strömung ist das in Spannweitenrichtung äußere Ende 7A bzw. 8A der ausgefahrenen Landeklappe 7 des Tragflügels 3 oder der Landeklappe 8 des Tragflügels 4. Der im Bereich des Klappenendes 7A bzw. 8A der Landeklappe 7 bzw. 8 entstehende Klappenwirbel 11 B bzw. 12B ist im wesentlichen der Großwirbel, der die für den nachfolgenden Luftverkehr bereits genannten Nachteile mit sich bringt.
Um die Wirbelintensität dieses Großwirbels zu reduzieren, wird erfindungsgemäß eine kontrolliert erzeugte Störströmung in den Entstehungsvorgang der Nachlaufströmung eingebracht. Damit wird bereits das Entstehen der gefährlichen Wirbelströmung gestört. Zur Generierung eines Störwirbels 13 bzw. 14 ist die Vorrichtung zur Reduzierung von Nachlaufwirbeln 9 bzw. 10 - im nachfolgenden Zusatzklappe 9 bzw. 10 bezeichnet - vorgesehen, die auf dem Tragflügel 3 bzw. 4 im Bereich des Klappenendes 7A bzw. 8A der Landeklappen 7 bzw. 8 angeordnet ist. In der vergrößerten Darstellung von Fig. 2B ist ersichtlich, dass der (kontrolliert erzeugte kleine) Störwirbel 13 bzw. 14 mit den zusammenlaufenden Wirbeln von der Flügelhinterkante 3B bzw. 4B, d.h. im wesentlichen mit dem Klappenwirbel 11B bzw. 12B interferiert. Die Wirkungsweise eines Störwirbels 13 oder 14 wird nachfolgend näher erläutert: Die bevorzugt auf 15 bis 25 Grad (relativ zum eingefahrenen Zustand) angestellte Zusatzfläche (Wirbelgenerator) 9 bzw. 10 erzeugt an ihrer Vorderkante auf der Saugseite einen kontrollierten Vorderkantenwirbel, der aus abgelöster Strömung der Vorderkante gespeist wird. Dieser Wirbel verlässt die Zusatzfläche 9 bzw. 10 an ihrer Hinterkante und interferiert als freier Störwirbel 13 bzw. 14 mit dem Klappenwirbel 11B bzw. 12B, der am Klappenende 7A bzw. 8A im Entstehen ist (durch Zusammenlaufen von Wirbelstärke, die entlang der Hinterkante als instabile Wirbelschicht abströmt). Die Wirkung ist so intensiv, dass der entstehende Klappenwirbel 11B bzw. 12B in Querschwingungen versetzt wird und dabei in seinem Konzentrationsprozess erheblich gestört wird. Infolge der Schwingungen verliert der Klappenwirbel 11B bzw. 12B an Stärke, wobei insbesondere die maximale Wirbetstärke im Kern des resultierenden Wirbels erheblich reduziert wird, was in Fig. 3, insbesondere in Fig. 3B gut erkennbar ist. In Fig. 3B ist die Wirbelintensität vom beispielhaft gezeigten Nachlaufwirbel 12 gezeigt, wobei infolge des Störwirbels 14 der Klappenwirbel 12B stark oszillierend und damit in seiner Intensität reduziert ist. Ein derart gestörter Wirbel 12 zerfällt vorzeitig. In Fig. 3A ist demgegenüber die Wirbelintensität von Nachlaufwirbeln eines Flugzeuges ohne eine erfindungsgemäße Vorrichtung 9 bzw. 10 gezeigt. Der Nachlaufwirbel 11 bzw. 12 eines solchen Flugzeuges weist einen ausgeprägten Kern auf, was die Spitze in der Mitte des Wirbels ausdrückt. Je höher diese Spitze, umso größer ist die Intensität des Wirbels.

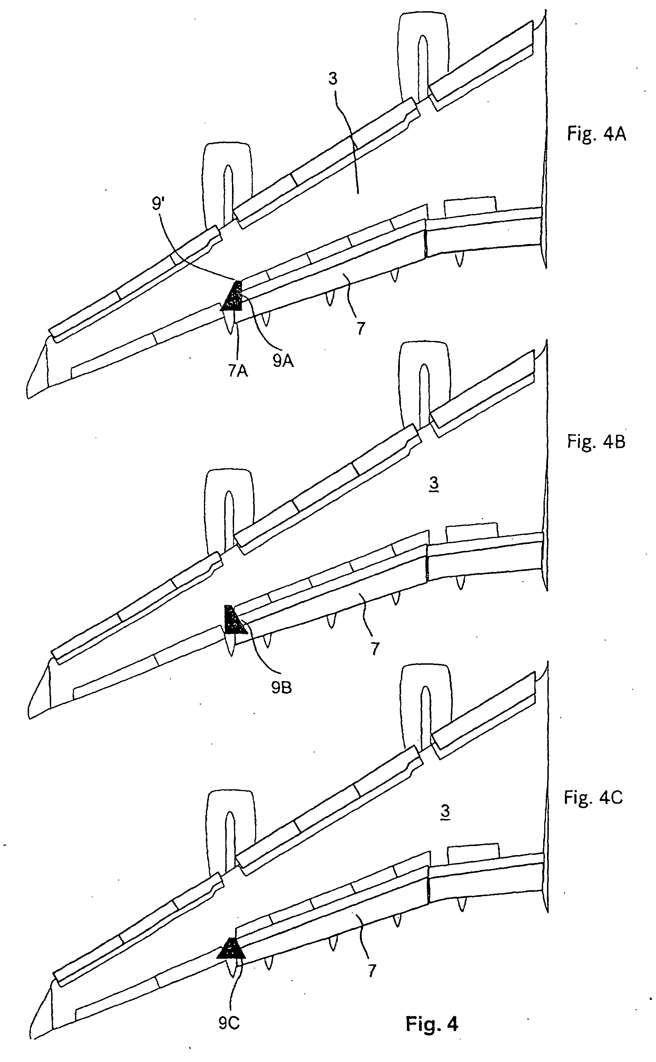

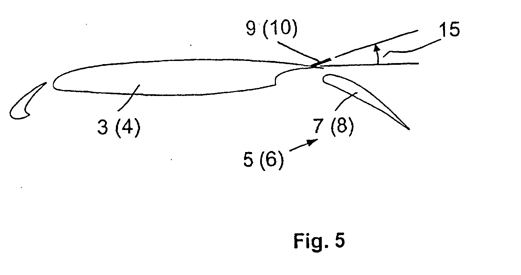

In der Fig. 4 sind Ausführungsformen der erfindungsgemäßen Zusatzklappe 9 (entspricht auch der Zusatzklappe 10 am Tragflügel 4) in den Figuren 4A bis 4C gezeigt.
Die relativ kleine Zusatzklappe 9 wird mit ihrem Fußpunkt 9' auf dem Flügel 3 im Bereich des Klappenendes 7A der Landeklappe 7 in vorzugsweise 60% bis 80% der Profiltiefe des Basisflügels angebracht, wobei als Profiltiefe ein Schnitt in Flugrichtung durch den Basisflügel zu verstehen ist. Der Fußpunkt 9' der Zusatzklappe 9 liegt in einem Bereich, der vom Ende der Landeklappe 7A gemessen sich beidseitig nach links oder rechts jeweils 10% der Halbspannweite erstreckt. Als Halbspannweite ist der Abstand von Rumpfmitte zur Flügelspitze definiert.
Die Zusatzklappe 9 muss während der Dauer ihrer Wirkung in die Strömung angestellt werden, wobei der bevorzugte Anstellwinkel in Fig. 5 gezeigt ist. Die Zusatzklappe 9 ist so geformt, dass ein kontrollierter (kleiner) Wirbel an ihrer Vorderkante entsteht, der beim Verlassen der Zusatzklappe 9 eine hohe turbulente Wirbelströmung darstellt. Diese energiereiche Strömung verlässt die Zusatzklappe 9 und dringt in die "Schwachstelle" der entstehendenden Nachlaufströmung ein, d.h. regt den Nachlaufwirbel zu intensiven Schwingungen an und unterdrückt dabei den Konzentrationsprozess, der anderenfalls zu einen starken Nachlaufwirbel 11 führen würde.
In der bevorzugten Ausführung wirkt die Zusatzklappe 9 (bzw. 10) als passives Bauteil, d.h. sie wird ausgefahren und bleibt während des Anflugs stationär. Es ist jedoch ebenfalls möglich, die Zusatzklappe 9 dynamisch zu betreiben, d.h. wechselsinnig oder gleichsinnig mit der Zusatzklappe 10 am Tragflügel 4. Dadurch können Längsschwingungen im Wirbel oder asymmetrische Wirbel entstehen, die geeignet sind, den Zerfallsprozess weiter zu beschleunigen.

In Fig. 4A ist eine erste bevorzugte Form der Zusatzklappe 9 dargestellt. Die Zusatzklappe 9 weist die Form 9A eines Flügels kleiner Streckung mit ungefähr 60 Grad Vorderkantenpfeilung einseitig links auf. Die andere Seite ist vorzugsweise ungepfeilt.
Die Fig. 48 zeigt eine weitere mögliche Form 9B. Die Zusatzklappe 9 ist hier als Flügel kleiner Streckung mit ungefähr 60 Grad Vorderkantenpfeilung einseitig rechts ausgebildet, die andere Seite ist ungepfeilt.
Eine dritte Ausführungsform 9C ist in Fig. 4C dargestellt. Diese Ausführungsform 9C ist gekennzeichnet durch einen Flügel kleiner Streckung mit ungefähr 60 Grad Vorderkantenpfeilung beidseitig (Deltaflügel). Bei einem Deltaflügel als Zusatzklappe entstehen zwei gegenläufig drehende Wirbel als Wirbelpaar, die als Störwirbel kontrolliert die Entstehung des Nachlaufwirbels stören sollen.
Allen drei Ausführungsformen ist gemeinsam, dass bevorzugt die gepfeilten Vorderkanten ähnlich einer Messerkante zugeschärft sind, um den Strömungsabriss zu erzwingen. Die gepfeilten Vorderkanten sind vorzugsweise geradlinig ausgebildet, können aber auch geschwungen sein, ähnlich wie der Tragflügel des Überschallflugzeuges Concorde. Die Hinterkante der Zusatzklappe 9A, 9B oder 9C ist vorzugsweise geradlinig ausgebildet und verläuft vorzugsweise senkrecht zur Flugrichtung.

In Fig. 5 ist ein Querschnitt durch den Tragflügel 3 bzw. 4 gezeigt. Es sind ebenfalls die Landeklappen 7 bzw. 8 als Teil des Hochauftriebssystems 5 bzw. 6 ersichtlich. Die Zusatzklappe 9 bzw. 10 wird zur Nutzung im Landeanflug ausgefahren, wobei der Anstellwinkel 15 der Zusatzklappe 9 bzw. 10 gegenüber der Oberseite des Tragflügels 3 bzw. 4 vorzugsweise zwischen 12 bis 25 Grad betragen sollte. Bei einem Anstellwinkel oberhalb von 30 Grad kann es zu einem unkontrollierten Strömungsabriss kommen, was aber gerade für die Bildung des kontrollierten Störwirbels 13 bzw. 14 unerwünscht ist.

Nicht gezeigt ist, wie im unbenutzten Zustand die Zusatzklappe 9 bzw. 10 in den Flügel 3 bzw. 4 eingeklappt wird und somit nicht die Flügelgeometrie für den Reiseflug stört. Mechanismen zum Einfahren von Spoilern sind aus dem Stand der Technik bekannt und auch für die Zusatzklappen 9 oder 10 anwendbar.

### Bezugszeichenliste

- 1 -: Flugzeug
- 2 -: Flugzeugrumpf
- 3 -: linker Tragflügel
- 3A -: Flügelspitze
- 3B -: Flügelhinterkante
- 4 -: rechter Tragflügel
- 4A -: Flügelspitze
- 4B -: Flügelhinterkante
- 5 -: Hochauftriebssystem (links)
- 6 -: Hochauftriebssystem (rechts)
- 7 -: Landeklappen (links)
- 7A -: äußeres Klappenende
- 8 -: Landeklappen (rechts)
- 8A -: äußeres Klappenende
- 9 -: Vorrichtung zur Reduzierung von Nachlaufwirbeln/Zusatzklappe
- 9' -: Fußpunkt
- 10 -: Vorrichtung zur Reduzierung von Nachlaufwirbeln/Zusatzklappe
- 11 -: Nachlaufwirbel (links)
- 11A -: Randwirbel
- 11B -: Klappenwirbel
- 12 -: Nachlaufwirbel (rechts)
- 12A -: Randwirbel
- 12B -: Klappenwirbel
- 13 -: Zusatzwirbel (Störwirbel) - links
- 14 -: Zusatzwirbel (Störwirbel) - rechts
- 15 -: Anstellwinkel

## Patentansprüche

1. Flugzeug mit einer Vorrichtung zur Reduzierung von Nachlaufwirbeln (11, 12) hinter Flugzeugen, wobei das Flugzeug (1) zur Auftriebserzeugung einen rechten und einen linken Tragflügel (3, 4) aufweist, die unter anderem Landeklappen (7, 8) als Hochauftriebssysteme (5, 6) umfassen, wobei die Vorrichtung aus einem am jeweiligen Tragflügel (3, 4) im Bereich der Flügelhinterkante (3B, 4B) in Nähe der äußeren, ausgefahrenen Landeklappenenden (7A, 8A) angeordneten Wirbelgenerator (9, 10) zur Erzeugung eines kontrollierten Störwirbels (13, 14) besteht, dessen Fußpunkt (9') in einem Bereich von 10% der Halbspannweite links und rechts des jeweiligen äußeren Landeklappenendes (7A, 8A) am Tragflügel (3, 4) vorgesehen ist, **dadurch gekennzeichnet, dass** der Wirbelgenerator als Zusatzklappe (9, 10) ausgebildet ist, wobei die Zusatzklappe (9, 10) für den Langsamflug einen ausgefahrenen Zustand einnimmt sowie bei Nichtgebrauch in den Flügel einklappbar ist und die Hinterkante der Zusatzklappe (9, 10), auch im ausgefahrenen Zustand, im wesentlichen parallel zur spannweitigen Richtung der Flügelbeplankung und im wesentlichen senkrecht zur Flugrichtung ausgerichtet ist und die Fläche der Zusatzklappe (9, 10) in Strömungsrichtung eine Vorderkantenpfeilung rechtsseitig, linksseitig oder beidseitig besitzt, um im ausgefahrenen Zustand an den gepfeitten Vorderkanten einen kontrollierten Vorderkantenwirbel zu erzeugen.

2. Flugzeug nach Anspruch 1, **dadurch gekennzeichnet, dass** der Fußpunkt der Zusatzklappe (9, 10) in Tiefenrichtung ab 60% der Profiltiefe des Tragflügels (3,4) vorgesehen ist.

3. Flugzeug nach einem der Ansprüche 1 oder 2, **dadurch gekennzeichnet, dass** die Zusatzklappe (9, 10) im ausgefahrenen Zustand einen Anstellwinkel (15) kleiner als 30 Grad relativ zur Ebene der Flügeloberseite aufweist.

4. Flugzeug nach Anspruch 3, **dadurch gekennzeichnet, dass** der Anstellwinkel (15) im Bereich zwischen 12 und 25 Grad liegt.

5. Flugzeug nach einem der Ansprüche 1 bis 4, **dadurch gekennzeichnet, dass** die Zusatzklappe (9, 10) in Form (9A) eines Flügels kleiner Streckung mit ungefähr 60 Grad Vorderkantenpfeilung einseitig links sowie die andere Seite ungepfeilt ausgebildet ist.

6. Flugzeug nach einem der Ansprüche 1 bis 4, **dadurch gekennzeichnet, dass** die Zusatzklappe (9, 10) in Form (9B) eines Flügels kleiner Streckung mit ungefähr 60 Grad Vorderkantenpfeilung einseitig rechts sowie die andere Seite ungepfeilt ausgebildet ist.

7. Flugzeug nach einem der Ansprüche 1 bis 4, **dadurch gekennzeichnet, dass** die Zusatzklappe (9, 10) in Form (9C) eines Flügels kleiner Streckung mit ungefähr 60 Grad Vorderkantenpfeilung beidseitig ausgebildet ist.

8. Flugzeug nach einem der Ansprüche 5 bis 7, **dadurch gekennzeichnet, dass** die mindestens eine gepfeilte Vorderkante der Zusatzklappe (9A, 9B oder 9C) zugeschärft ist und die Hinterkante der Zusatzklappe (9A, 9B oder 9C) vorzugsweise geradlinig ausgebildet ist.

9. Flugzeug nach einem der vorangegangenen Ansprüche, **dadurch gekennzeichnet, dass** die Zusatzklappe (9, 10) zur Wirkung im Langsamflug einen ausgefahrenen Zustand stationär einnimmt und dieser Zustand symmetrisch an jedem Tragflügel (3, 4) vorgesehen ist.

10. Flugzeug nach einem der Ansprüche 1 bis 8, **dadurch gekennzeichnet, dass** die Zusatzklappe (9, 10) zur Wirkung im Langsamflug dynamisch zwischen einem eingefahrenen und einem ausgefahrenen Zustand wechselt, wobei beidseitig an den Tragflügeln (3, 4) die Bewegung symmetrisch ausgeführt wird.

11. Flugzeug nach einem der Ansprüche 1 bis 8, **dadurch gekennzeichnet, dass** die Zusatzklappe (9, 10) zur Wirkung im Langsamflug dynamisch zwischen einem eingefahrenen und einem ausgefahrenen Zustand wechselt, wobei beidseitig an den Tragflügeln (3, 4) die Bewegung antimetrisch ausgeführt wird.

12. Verfahren zur Reduzierung von Nachlaufwirbeln (11, 12) hinter Flugzeugen (1) mit dem je Tragflügel (3, 4) ein Störwirbel (13, 14) mittels einer angestellten Zusatzklappe (9, 10) generiert wird, wobei an der Vorderkante der angestellten Zusatzklappe (9, 10) auf der Saugseite ein Vorderkantenwirbel als Störwirbel (13, 14) erzeugt wird und gezielt im Bereich des Entstehens einer an der Flügelhinterkante (3B, 4B) zusammenlaufenden wirbeligen Strömung (11B, 12B) eingebracht wird und der Störwirbel (13, 14) mit einem im Entstehungsprozess befindlichen Klappenwirbel (11B, 12B) interferiert, in ihn eindringt und ihn zu intensiven Schwingungen anregt, die zur Verminderung der Wirbelstärke führen.

13. Verfahren nach Anspruch 12, **dadurch gekennzeichnet, dass** die Zusatzklappe (9, 10) zur Wirkung im Langsamflug ausgefahren wird, den ausgefahrenen Zustand stationär einnimmt und dieser Zustand symmetrisch an jedem Tragflügel (3, 4) vorgesehen ist.

14. Verfahren nach Anspruch 12, **dadurch gekennzeichnet, dass** die Zusatzklappe (9, 10) zur Wirkung im Langsamflug dynamisch zwischen einem eingefahrenen und einem ausgefahrenen Zustand wechselt, wobei beidseitig an den Tragflügeln (3, 4) die Bewegung symmetrisch ausgeführt wird.

15. Verfahren nach Anspruch 12, **dadurch gekennzeichnet, dass** die Zusatzklappe (9, 10) zur Wirkung im Langsamflug dynamisch zwischen einem eingefahrenen und einem ausgefahrenen Zustand wechselt, wobei beidseitig an den Tragflügeln (3, 4) die Bewegung antimetrisch ausgeführt wird.

## Claims

1. Aircraft having a device for reducing trailing vortices (11, 12) behind aircraft, wherein the aircraft (1) for generating lift has a starboard and a port wing (3, 4), which i.a. comprise landing flaps (7, 8) as vertical lift systems (5, 6), wherein the device comprises a vortex generator (9, 10) for generating a controlled interference vortex (13, 14), which is disposed on each wing (3, 4) in the region of the trailing wing edge (3B, 4B) in the vicinity of the outer, extended landing flap ends (7A, 8A) and the foot point (9') of which is provided in a region of 10% of the half wing span on the left and on the.right of the respective outer landing flap end (7A, 8A) on the wing (3, 4), **characterized in that** the vortex generator is designed as an additional flap (9, 10), wherein the additional flap (9, 10) for low-speed flight is in an extended state and when not in use is retractable into the wing and the trailing edge of the additional flap (9, 10), even in the extended state, is aligned substantially parallel to the spanwise direction of the wing planking and substantially at right angles to the direction of flight and the surface of the additional flap (9, 10) has in flow direction a leading-edge sweep on the right side, on the left side or on both sides for generating in the extended state a controlled leading-edge vortex at the swept leading edges.

2. Aircraft according to claim 1, **characterized in that** the foot point of the additional flap (9, 10) is provided in depth direction from 60% of the profile depth of the wing (3, 4).

3. Aircraft according to one of claims 1 or 2, **characterized in that** the additional flap (9, 10) in the extended state has an angle of attack (15) of less than 30 degrees relative to the plane of the upper side of the wing.

4. Aircraft according to claim 3, **characterized in that** the angle of attack (15) lies in the region of between 12 and 25 degrees.

5. Aircraft according to one of claims 1 to 4, **characterized in that** the additional flap (9, 10) is designed in the shape (9A) of a wing of low extension having an approximately 60° leading-edge sweep on one side at the left and the other side is of an unswept design.

6. Aircraft according to one of claims 1 to 4, **characterized in that** the additional flap (9, 10) is designed in the shape (9B) of a wing of low extension having an approximately 60° leading-edge sweep on one side at the right and the other side is of an unswept design.

7. Aircraft according to one of claims 1 to 4, **characterized in that** the additional flap (9, 10) is designed in the shape (9C) of a wing of low extension having an approximately 60° leading-edge sweep on both sides.

8. Aircraft according to one of claims 5 to 7, **characterized in that** the at least one swept leading edge of the additional flap (9A, 9B or 9C) is bevelled and the trailing edge of the additional flap (9A, 9B or 9C) is preferably of a rectilinear design.

9. Aircraft according to one of the preceding claims, **characterized in that** the additional flap (9, 10) for operation in low-speed flight is stationary in an extended state and said state is provided symmetrically at each wing (3, 4).

10. Aircraft according to one of claims 1 to 8, **characterized in that** the additional flap (9, 10) for operation in low-speed flight alternates dynamically between a retracted and an extended state, wherein on both sides at the wings (3, 4) the movement is executed symmetrically.

11. Aircraft according to one of claims 1 to 8, **characterized in that** the additional flap (9, 10) for operation in low-speed flight alternates dynamically between a retracted and an extended state, wherein on both sides at the wings (3, 4) the movement is executed antimetrically.

12. Method of reducing trailing vortices (11, 12) behind aircraft (1), whereby one interference vortex (13, 14) per wing (3, 4) is generated by means of an adjusted additional flap (9, 10), wherein at the leading edge of the adjusted additional flap (9, 10) on the suction side a leading-edge vortex is generated as an interference vortex (13, 14) and purposefully introduced in the area of development of a turbulent flow (11B, 12B) converging at the trailing wing edge (3B, 4B) and the interference vortex (13, 14) interferes with and penetrates into a developing flap vortex (11B, 12B) and excites the latter into intensive vibrations, which lead to reduction of the strength of the vortex.

13. Method according to claim 12, **characterized in that** the additional flap (9, 10) for operation in low-speed flight is extended, is stationary in the extended state and said state is provided symmetrically at each wing (3, 4).

14. Method according to claim 12, **characterized in that** the additional flap (9, 10) for operation in low-speed flight alternates dynamically between a retracted and an extended state, wherein on both sides at the wings (3, 4) the movement is executed symmetrically.

15. Method according to claim 12, **characterized in that** the additional flap (9, 10) for operation in low-speed flight alternates dynamically between a retracted and an extended state, wherein on both sides at the wings (3, 4) the movement is executed antimetrically.

## Revendications

1. Avion avec dispositif de réduction des tourbillons de sillage (11, 12) à l'arrière d'avions, l'avion (1) présentant, pour produire la sustentation, des ailes porteuses droite et gauche (3, 4) comprenant notamment des volets hypersustentateurs (7, 8) en tant que systèmes d'hypersustentation (5, 6), le dispositif étant constitué d'un générateur de tourbillons (9, 10) destiné à produire un tourbillon perturbateur (13, 14) et disposé contre contre l'aile porteuse concernée (3, 4), dans la zone du bord arrière de l'aile (3B, 4B), à proximité de l'extrémité extérieure déployée du volet hypersustentateur (7A, 8A), dont le pied (9') a été prévu contre l'aile porteuse (3, 4), à gauche et à droite de l'extrémité externe concernée du volet hypersustentateur (7A, 8A), dans une amplitude correspondant à 10 % de la moitié de la travée, **caractérisé en ce que** le volet supplémentaire (9, 10) pour le vol lent adopte une position déployée et peut, lorsqu'il n'est pas utilisé, être rabattu dans l'aile, **en ce que** le bord arrière du volet supplémentaire (9, 10) a été, également en position déployée, orientée de manière essentiellement parallèlement à la direction d'écartement du vaigrage de l'aile, et de manière essentiellement perpendiculaire à la direction de vol et **en ce que** la surface du volet supplémentaire (9, 10) possède, dans la direction de l'écoulement, une flèche sur le bord avant, à droite, à gauche ou des deux côtés, pour, dans la position déployée, produire un tourbillon contrôlé sur les bords avant fléchés.

2. Avion selon la revendication 1, **caractérisé en ce que** le pied du volet supplémentaire (9, 10) a été, prévu dans le sens de la profondeur, à partir de 60 % de la profondeur de sculpture de l'aile porteuse (3, 4).

3. Avion selon une des revendications 1 ou 2, **caractérisé en ce que** le volet supplémentaire (9, 10) présente, en position déployée, un angle d'incidence (15) de moins de 30 degrés par rapport au plan de la face supérieure de l'aile.

4. Avion selon la revendication 3, **caractérisé en ce que** l'angle d'incidence (15) est compris entre 12 et 25 degrés.

5. Avion selon une des revendications 1 à 4, **caractérisé en ce que** le volet supplémentaire (9, 10) se présente sous la forme (9A) d'une aile à allongement réduit avec un fléchage des bords avant de 60 % environ, à gauche, l'autre face n'étant pas fléchée.

6. Avion selon une des revendications 1 à 4, **caractérisé en ce que** le volet supplémentaire (9, 10) se présente sous la forme (9B) d'une aile à allongement réduit avec un fléchage des bords avant de 60 % environ, à droite, l'autre face n'étant pas fléchée.

7. Avion selon une des revendications 1 à 4, **caractérisé en ce que** le volet supplémentaire (9, 10) se présente sous la forme (9C) d'une aile à allongement réduit avec un fléchage des bords avant de 60 % environ, des deux côtés.

8. Avion selon une des revendications 5 à 7, **caractérisé en ce qu'**au moins un bord avant fléché du volet supplémentaire (9A, 9B ou 9C) est effilé et le bord arrière du volet additionnel (9A, 9B ou 9C) est de préférence rectiligne.

9. Avion selon une des revendications précédentes, **caractérisé en ce que** le volet additionnel (9, 10) adopte, pour agir pendant le vol lent, une position déployée stationnaire et cette position a été prévue symétriquement par rapport à chaque aile porteuse (3, 4).

10. Avion selon une des revendications 1 à 8, **caractérisé en ce que**, pour agir pendant le vol lent, le volet supplémentaire (9, 10) oscille de façon dynamique entre une position rentrée et une position déployée, le mouvement étant symétrique des deux côtés des ailes porteuses (3, 4).

11. Avion selon une des revendications 1 à 8, **caractérisé en ce que**, pour agir pendant le vol lent, le volet supplémentaire (9, 10) oscille de façon dynamique entre une position rentrée et une position déployée, le mouvement étant asymétrique des deux côtés des ailes porteuses (3, 4).

12. Procédé de réduction des tourbillons de sillage (11, 12) à l'arrière des avions, grâce auquel un tourbillon perturbateur (13, 14) est généré pour chaque aile porteuse (3, 4) à l'aide d'un volet supplémentaire (9, 10), un tourbillon étant produit sous la forme d'un tourbillon perturbateur (13, 14) contre le bord avant du volet supplémentaire (9, 10), sur le côté d'aspiration et étant inséré de manière ciblée dans la zone de formation d'un écoulement (11B, 12B) tourbillonnaire convergeant contre le bord arrière de l'aile (3B, 4B) et le tourbillon perturbateur (13, 14) interférant avec un tourbillon à volets (11B, 12B) faisant partie du processus de formation, pénétrant dans ce dernier et faisant osciller ce dernier de manière intensive et de telle sorte à réduire la force tourbillonnaire.

13. Procédé selon la revendication 12, **caractérisé en ce que**, pour agir pendant le vol lent, le volet supplémentaire (9, 10) est déployé et adopte une position déployée, stationnaire et symétrique par rapport à chaque aile porteuse (3, 4)

14. Procédé selon la revendication 12, **caractérisé en ce que**, pour agir pendant le vol lent, le. volet supplémentaire (9, 10) oscille de façon dynamique entre une position rentrée et une position déployée, le mouvement étant symétrique contre les ailes porteuses (3, 4), des deux côtés.

15. Procédé selon la revendication 12, **caractérisé en ce que**, pour agir pendant le vol lent, le volet supplémentaire (9, 10) oscille de façon dynamique entre une position rentrée et une position déployée, le mouvement étant asymétrique contre les ailes porteuses (3, 4), des deux côtés.
